# EUROPÄISCHE PATENTANMELDUNG

(11) **EP 1 231 799 A1**
(43) Veröffentlichungstag der Anmeldung: **14.08.2002**
(21) Anmeldenummer: 02001890.9
(22) Anmeldetag: 28.01.2002
(51) Int. Cl.: H04Q 7/26

(54) **Verfahren und Vorrichtung zum erstmaligen Einbuchen eines DECT/GAP-Handsets oder eines -Systemterminals in eine DECT-Telekommunikationsanlage**

(30) Priorität: 10.02.2001 DE 10106209
(71) Anmelder: Tenovis GmbH & Co. KG, 60326 Frankfurt am Main (DE)
(72) Erfinder: Schmidt, Thorsten, 61118 Bad Vilbel (DE)
(74) Vertreter: Patentanwaltskanzlei WILHELM & BECK

(57) **Zusammenfassung**

Erfindungsgemäß wird ein Verfahren bzw. eine Vorrichtung zum erstmaligen Einbuchen eines DECT/GAP-Handsets (5) oder eines -Systemterminals (10) in eine DECT- Telekommunikationsanlage (8) vorgeschlagen, wobei die Einbuchung des Handsets (5) unabhängig von der DECT- Telekommunikationsanlage (8) auf einem externen Referenzsystem (1) erfolgt. Dabei wird die vorhandene Anlagenkommunikationsdatei, auf der die Datensätze aller Handsets (5) gespeichert sind, ausgelesen, auf dem Referenzsystem (1) mit denen des neuen Handsets (5) modifiziert und wieder an die DECT- Telekommunikationsanlage (8) übertragen. Die Übertragung kann alternativ über einen Datenträger (3) oder das öffentliche Telefonnetz (7) erfolgen. Dadurch ergibt sich der Vorteil, dass bei der Erweiterung oder Änderung der DECT- Telekommunikationsanlage (8) keine Einbuchung des Handsets (5) vor Ort erforderlich ist. Es genügt, nach der Modifikation der Anlagenkommunikationsdatei die neuen Handsets (5) an den Nutzer der DECT- Telekommunikationsanlage (8) zu schicken. Dieser schaltet die neuen Handsets (5) ein, die dann sofort betriebsbereit sind.

## Beschreibung

Die Erfindung geht aus von einem Verfahren bzw. einer Vorrichtung zum erstmaligen Einbuchen eines DECT/GAP-Handsets oder eines -Systemterminals nach der Gattung der nebengeordneten Ansprüche 1 und 8. Telekommunikationsanlagen, die den Nachrichten- oder Informationsaustausch zwischen einer Basisstation oder einer Zentrale und wenigstens einem Handset nach dem DECT-Standard (Digital Enhanced Cordless Telecommunication) drahtlos über den Luftweg steuern, sind schon seit längerem bekannt und in entsprechenden Normungsvorschriften festgelegt. Der GAP-Standard (Generic Access Profile) stellt dabei eine Untermenge des DECT-Standards dar. Er hat die Aufgabe, die Funktionsbereitschaft der DECT-Luftschnittstelle für Telefonanwendungen sicherzustellen. Sowohl die Basisstation der Telekommunikationsanlage als auch die einzelnen an dieser Basisstation betriebenen Handsets haben für die bidirektionalen Informationsübertragung jeweils eine Sende- und Empfangseinrichtung, wobei die Reichweite der Funkverbindung relativ beschränkt ist. Hinzukommt, dass die einzelnen Handsets, die auch untereinander kommunizieren können, nur an einer vorher festgelegten Basisstation eingebucht sein müssen, um Störungen oder Abhörmöglichkeiten insbesondere in solchen Gebieten, in denen sich mehrere Funkbereiche überschneiden, zu verhindern. Um dieses sicherzustellen, wird für jedes Handset ein Zugangscode vereinbart, über den die Verbindung zwischen der vorgesehenen Basisstation und dem Handset ermöglicht wird. Solche Zugangscodes sind individuell (auch veränderbar) festgelegt und werden in der Regel mit einem bestimmtem Algorithmus so gebildet, dass der Zugangscode weder ausgeforscht noch kopiert werden kann. Das hat zur Folge, dass jedes Handset bei seiner Neuinstallation erstmalig in eine Anlagenkonfigurationsdatei vor Ort eingebucht werden muss. Da diese Einbuchung relativ viel technisches Know how und Erfahrungen verlangt, wird sie vom Service durchgeführt.

Dieses Verfahren hat den Nachteil, dass es relativ zeit- und kostenaufwendig ist, insbesondere dann, wenn ein Handset durch ein neues Handset ersetzt oder die Telekommunikationsanlage erweitert werden soll. Eine schnelle Änderung oder Anpassung der Telekommunikationsanlage wird zum Leidwesen des Anwenders aus den oben genannten Gründen in der Regel nicht möglich sein.

Aus der DE 19740561 A1 ist des weiteren ein Verfahren zum Subskripieren, d. h. zum (vorübergehenden) Anmelden von Telekommunikationsgeräten mit bei den Telekommunikationsgeräten durch drahtlose Telekommunikation verbindbaren Gegenstationen, insbesondere von DECT Mobilteilen bei DECT-Basisstationen in einem DECT-System bekannt. Das Mobilteil (Handset) sucht insbesondere wenn mehrere empfangsbereite Basisstationen in dem Empfangsbereich des Mobilteils liegen, zunächst die Basisstation aus, bei der beispielsweise die größte Feldstärke gemessen wird. Die Feldstärke ist ein Indiz für die nächstliegende Basisstation, da davon ausgegangen wird, dass dieser Basisstation die größte Wahrscheinlichkeit für die richtige Auswahl zufällt. Voraussetzung allerdings ist, dass bei den üblichen Multiplexverfahren wie TDMA- (Time Division Multiple Access), FDMA- (Frequency Division Multiple Access) oder TDD-Verfahren (Time Division Duplex) die empfangenen Basisstationen eine festgelegte Kennung innerhalb ihres Zeitfensters senden. Wird diese Kennung, das in der Norm festgelegte sogenannte Bit "a44" von dem Mobilteil erkannt, dann wird dieses als Indikation dafür gewertet, dass die zugeordnete Basisstation empfangsbereit ist. Anschließend wird eine Subskriptionsprozedur gestartet, durch die festgestellt wird, ob der vereinbarte Zugangscode, ein PIN-Wort (Personal Identity Number) und/oder ein AC-Wort (Authentication Code) zwischen dem Mobilteil und der Basisstation zutrifft. Ist das der Fall, dann ist die Anmeldung abgeschlossen und die Informationsübertragung zwischen den beiden Geräten kann durchgeführt werden.

Im anderen Fall, wenn der vereinbarte Zugangscode nicht zutrifft, sucht das Mobilteil die nächste empfangsbereite Basisstation mit der zweitstärksten Feldstärke aus und versucht erneut durch die Prüfung des Zugangscodes, ob die nun gefundene Basisstation die gesuchte ist. Dieses Anmeldeverfahren wird solange fortgeführt, bis die gesuchte Basisstation gefunden ist und die Anmeldung des Mobilteils erfolgreich abgeschlossen werden kann.

Bekannt ist auch, außer der Feldstärke auch andere Parameter für die Erkennung einer Basisstation zu verwenden.

Allerdings bleibt dem Anwender auch bei diesem Anmeldeverfahren nicht das Problem erspart, dass vor der Anmeldung eines Mobilteils dieses erst in der Anlagenkonfigurationsdatei der Telekommunikationsanlage vorab eingebucht sein muss. Denn ohne die Vereinbarung eines einmaligen Zugangscodes kann keine Telekommunikation mit einer Basisstation durchgeführt werden.

Das erfindungsgemäße Verfahren bzw. die Vorrichtung zum erstmaligen Einbuchen eines DECT/GAP-Handsets oder eines Systemterminals in eine DECT-Telekommunikationsanlage mit den kennzeichnenden Merkmalen der nebengeordneten Ansprüche 1 und 8 hat demgegenüber den Vorteil, dass die Ein- oder Ausbuchung in die Kunden-Telekommunikationsanlage bereits vor der Auslieferung der Handsets beim Lieferanten erfolgt, so dass der Kunde nach dem Empfang der Handsets diese sofort in Betrieb nehmen kann. Dadurch entfallen vorteilhaft die bisher üblichen Wartezeiten und entsprechende Kosten für die Einbuchung der Handsets vor Ort. Als besonders vorteilhaft wird auch angesehen, dass bei einer schon bestehenden Telekommunikationsanlage ohne Störungen des laufenden Betriebes zur Einbuchung der neuen Handsets die vorhandene Anlagenkonfigurationsdatei verwendet werden kann, da für die Einbuchung der neuen Handsets nur die entsprechenden neuen Dateien hinzugefügt werden müssen.

Durch die in den abhängigen Ansprüchen aufgeführten Maßnahmen sind vorteilhafte Weiterbildungen und Verbesserungen der in den nebengeordneten Ansprüchen 1 und 8 aufgeführten Verfahren bzw. der Vorrichtung möglich. Eine besonders günstige Lösung wird darin gesehen, die Ein- oder Ausbuchung mittels einer Vorrichtung mit einem Referenzsystem durchzuführen. Dieses Referenzsystem enthält vorzugsweise alle notwendigen Einrichtungen, die für den Betrieb mit den neuen Handsets erforderlich sind. Dadurch kann dann leicht eine Überprüfung der neuen Handsets für die erfolgreich durchgeführte Einbuchung noch beim Lieferanten durchgeführt und eventuell auftretende Fehler behoben werden.

Durch die Verwendung eines Rechners mit einem Laufwerk für einen Datenträger ergibt sich die günstige Lösung, die Anlagenkonfigurationsdatei über den Datenträger, beispielsweise einer Diskette, in das Referenzsystem zu überspielen. Auf diese Weise erhält man einen leichten Zugang zur Anlagenkonfigurationsdatei.

Alternativ ist vorsehbar, die Anlagenkonfigurationsdatei über ein öffentliches Telefonnetz in die Referenzanlage einzuspielen. Durch diesen externen Zugriff sind Änderungen noch schneller durchführbar und die Überspielung mittels einer Diskette erübrigt sich.

Vorteilhaft ist weiter, zum Ein- oder Auslesen der Anlagenkonfigurationsdatei ein spezielles (Software)-Programm zu verwenden. Dieses Programm ist auf die gewünschten Anforderungen zugeschnitten und ermöglicht eine schnelle und sichere Handhabung.

Günstig ist auch, zu Ein- oder Ausbuchen ebenfalls ein Programm zu verwenden. Dadurch kann auch die Einbuchung eines neuen Handsets schnell und sicher durchgeführt werden, so dass die entstehenden Kosten für den Kunden niedrig gehalten werden können.

Durch die Übertragung der geänderten Anlagenkonfigurationsdatei über ein öffentliches Telefonnetz in die Telekommunikationsanlage des Kunden ergibt sich vorteilhaft die schnellste Datenübertragung. Wenn der Kunde die Handsets beispielsweise durch postalische Lieferung in Empfang nimmt, ist seine Telekommunikationsanlage bereits auf die neuen Handsets eingestellt, so dass er diese selbst und ohne weitere Verzögerungen in Betreib nehmen kann.

Für die schnelle Datenübertragung der Anlagenkonfigurationsdatei entweder zum Referenzsystem oder zurück zur Telekommunikationsanlage des Kunden über das öffentliche Telefonnetz wird vorteilhaft ein Interface mit einem der üblichen Standards verwendet, so dass der Datentransfer sicher und zuverlässig durchgeführt werden kann.

Der Erfindung liegt die Aufgabe zu Grunde, ein DECT-Handset offline in eine Telekommunikationsanlage eines Kunden einzubuchen, ohne dass dieses neue Handset eine direkte Verbindung zur laufenden Telekommunikationsanlage des Kunden besitzt. Diese Aufgabe wird mit den Merkmalen der nebengeordneten Ansprüche 1 und 8 gelöst.

Ein Ausführungsbeispiel der Erfindung ist in der Zeichnung dargestellt und wird in der nachfolgenden Beschreibung näher erläutert.

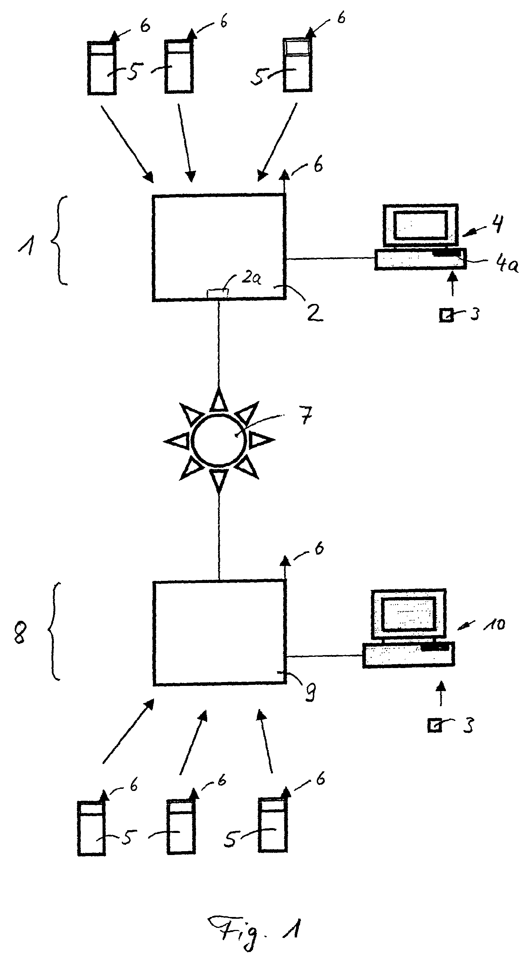

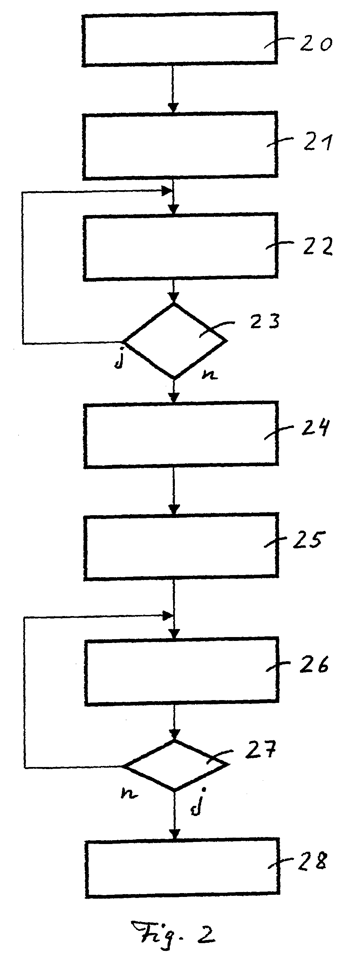

Figur 1 zeigt ein Blockschaltbild mit einem Referenzsystem und einer Telekommunikationsanlage eines Kunden und Figur 2 zeigt ein Flussdiagramm über einen Einbuchungsvorgang.

Figur 1 zeigt ein Blockschaltbild eines Ausführungsbeispiels der Erfindung. Im oberen Teil der Figur 1 ist eine Vorrichtung mit einem Referenzsystem 1 dargestellt, die vorzugsweise beim Lieferanten oder einer Servicegruppe installiert ist. Das Referenzsystem 1 ist somit räumlich extern von der Telekommunikationsanlage eines Kunden aufgestellt und arbeitet völlig unabhängig von der Telekommunikationsanlage des Kunden. Vorzugsweise arbeitet das Referenzsystem 1 nach dem bekannten DECT/GAP Standard. Es weist eine Basisstation 2 auf, die alle für die drahtlose Informationsübertragung zu den korrespondierenden Handsets 5 erforderlichen Einrichtungen wie Sender, Empfänger, eine Antenne 6, eine Steuerung usw. enthält. Eine derartige Basisstation 2 ist per se bekannt und muss daher nicht näher beschrieben werden. Des weiteren ist die Basisstation 2 mit einem Interface (Schnittstelle) 2a ausgestattet, das den Telefonverkehr und den Datenaustausch beispielsweise über ein ISDN- Telekommunikationsnetz ermöglicht. Natürlich können auch andere bekannte Schnittstellen 2a verwendet werden.

Die Basisstation 2 ist über elektrische Leitungen oder drahtlos mit einem Rechner 4 verbunden, der mit einem entsprechenden Daten- und Programmspeicher, einem oder mehreren Softwareprogrammen, wenigstens einem Laufwerk 4a, einem Monitor usw. ausgerüstet ist. In das Laufwerk 4a kann ein Datenträger 3, zum Beispiel in Form einer Diskette oder dergleichen eingeschoben werden, so dass der Rechner 4 auf die auf dem Datenträger 3 gespeicherten Programme und Daten zugreifen kann. So kann u. a. eine Anlagenkonfigurationsdatei eines Kunden auf dem Datenträger 3 gespeichert sein, die zur Erweiterung der Telekommunikationsanlage des Kunden, aus Reparatur- oder Servicegründen modifiziert werden soll. Natürlich können auch neu einzubuchende Handsets 5 auf diesem Wege bearbeitet werden. Der genaue Funktionsablauf wird noch in einem späteren Abschnitt näher erläutert.

Über die Antennen 6 sind die zu ändernden Handsets 5, die ebenfalls jeweils eine Antenne 6 haben, drahtlos verbunden. Die Handsets 5 sind handelsüblicher Mobilteile mit den üblichen für den Betrieb mit einer Basisstation 2 erforderlichen Einheiten. Sie weisen in der Regel einen Rechner, eine Steuerung, Sende-/und Empfangsmittel, ein Mikrofon, einen Lautsprecher, einen Speicher für Programme, eine Datei mit Daten und insbesondere einen Identifikations- oder Zugangscode usw. auf. Dieser Zugangscode wird bei der erstmaligen Einbuchung des Handsets 5 festgelegt. Mit Hilfe dieses Zugangscodes, der mit einem Algorithmus auch veränderlich ausgebildet sein kann, erfolgt bei einer Anmeldung des Handsets 5 sowohl die Identifizierung als auch der Informationsaustausch.

Soll beispielsweise ein neues Handset 5 zur Erweiterung der bestehenden Telekommunikationsanlage 8 des Kunden in die Telekommunikationsanlage 8 eingebucht werden, dann muss speziell für dieses Handset 5 aus den oben genannten Gründen eine eigenen Datei angelegt werden. Die einzelnen Dateien der Handsets 5 werden in der Telekommunikationsanlage 8 des Kunden in Form einer Anlagenkonfigurationsdatei gespeichert, so dass die Telekommunikationsanlage 8 den gesamten Informationsaustausch mit allen betriebsbereiten Handsets 5 steuern kann.

Gemäß der Figur 1 ist die Vorrichtung mit dem Referenzsystem 1 beispielsweise auch über die Schnittstelle 2a mit einem öffentlichen Telefonnetz 7 verbunden, an das auch die Telekommunikationsanlage 8 des Kunden angeschlossen ist. Die Telekommunikationsanlage 8 ist ähnlich wie das Referenzsystem 1 mit allen erforderlichen Einheiten für den drahtlosen Informationsaustausch zwischen einem Server (Basisstation) 9 und seinen zugeordneten Handsets 5 ausgerüstet. Der Informationsaustausch erfolgt wieder über die Antennen 6 wie bei der Referenzanlage 1, vorzugsweise nach dem bekannten DECT-Standard.

An den Server 9 ist des weiteren ein Systemterminal 10 (Systemrechner) angeschlossen, der im wesentlichen zur Steuerung der Telekommunikationsanlage 8 und für Servicezwecke dient. Auch dieser Systemrechner weist ein Laufwerk für einen Speicher, einen Datenträger 3, beispielsweise für eine Diskette usw. auf. In der Telekommunikationsanlage 8 des Kunden ist des weiteren die Anlagenkonfigurationsdatei gespeichert, über die alle eingeschriebenen Handsets 5 bedient werden. Natürlich können auch weitere Programme, beispielsweise zum Ein-/Auslesen der Konfigurationsdatei in der Telekommunikationsanlage 8 gespeichert werden.

Alternativ ergibt sich somit die Möglichkeit, dass die Anlagenkonfigurationsdatei sowohl über den Datenträger 3 als auch über das öffentliche Telefonnetz 7 an das Referenzsystem 1 übertragen werden kann.

An Hand der Figur 2 wird die Funktionsweise des Verfahrens zum erstmaligen Einbuchen eines neuen Handsets 5 in eine bestehende DECT-Telekommunikationsanlage 8 näher erläutert. Dabei wird davon ausgegangen, dass in der vorhandenen DECT-Telekommunikationsanlage 8 bereits eine Anlagenkonfigurationsdatei für eine bestimmte Anzahl von Handsets 5 besteht und diese Handsets 5 - wie in Figur 2 dargestellt - um drei weitere Handsets 5 erweitert werden soll.

Nach dem Einschalten und Starten des Referenzsystems 1 in Position 20 wird zunächst in Position 21 die Anlagenkonfigurationsdatei der Telekommunikationsanlage 8 ausgelesen und in den Speicher des Referenzsystem 1, genau gesagt in den Speicher des Rechners 4 eingelesen. Dies erfolgt wahlweise entweder über das angeschlossene Telefonnetz 7 oder über den Datenträger 3. Zum Auslesen der Anlagenkonfigurationsdatei wird vorzugsweise ein spezielles Programm SERV verwendet, das für diesen Vorgang zugeschnitten ist.

In Position 22 wird nun für jedes der drei Handsets 5 eine individuelle Datei erstellt und die vorhandene Anlagenkonfigurationsdatei entsprechend modifiziert. Dieser Vorgang lässt sich ebenfalls vorzugsweise mit einem auf diese Aufgabe zugeschnittenen Programm COSY durchführen. Bei diesem Vorgang kann der Zugangscode nach einem vorgegebenen Algorithmus gebildet werden. Er enthält eine Anlagenkennnummer der Telekommunikationsanlage 8, einen einmaligen und eindeutigen Gerätecode für das Handset 5 sowie einen Zugangscode für das Handset 5.

Natürlich sind in alternativer Ausgestaltung der Erfindung auch alternative Ausbildungen des Zugangscodes für das Handset 5 möglich.

In Position 23 wird abgefragt, ob die Datei für das neue Handset 5 richtig gebildet wurde und diese in die Anlagenkonfigurationsdatei übernommen werden kann. Ist dies nicht der Fall, dann erfolgt ein Rücksprung auf Position 22, so dass der Vorgang wiederholt werden kann. Im anderen Fall wird auf Position 24 weitergesprungen und die Bildung einer neuen Datei mit einem Zugangscode für das nächste Handset 5 gestartet.

In Position 25 wird die neue Datei wieder in die Anlagenkonfigurationsdatei überspielt und in Position 26 wird die modifizierte Anlagenkonfigurationsdatei mit Hilfe des Programms SERV in die Telekommunikationsanlage 8 des Kunden zurückübertragen.

In Position 27 erfolgt eine Kontrolle, ob die Rückübertragung fehlerfrei war. War dies nicht der Fall, springt das Flussdiagramm auf Position 26 zurück.

War dagegen der Vorgang erfolgreich, dann stoppt das Programm in Position 28.

Nach dem Zusenden der Handsets 5 an den Kunden kann dieser die neuen Handsets 5 sofort in Betrieb nehmen.

Natürlich können auf die zuvor beschriebene Weise auch reparierte Handsets 5 wieder neu in die Telekommunikationsanlage 8 eingebucht werden. Der gleiche Ablauf ergibt sich sinngemäß auch bei der Einbuchung eines Systemterminals.

Nachdem für alle gewünschten Handsets 5 die Zugangscodes gebildet und in die modifizierte Anlagenkonfigurationsdatei übertragen wurden, können die Handsets 5 vom Kunden in Betrieb genommen werden.

### Bezugszeichenliste

- 1: Vorrichtung mit einem Referenzsystem
- 2: Basisstation
- 2a: Interface
- 3: Datenträger mit Anlagenkonfigurationsdatei
- 4: Rechner
- 4a: Laufwerk
- 5: (neues) Handset
- 6: Antenne
- 7: öffentliches Telefonnetz
- 8: DECT- Telekommunikationsanlage des Kunden
- 9: Server
- 10: Systemterminal

## Patentansprüche

1. Verfahren zum erstmaligen Einbuchen eines DECT/GAP-Handsets (5) oder Systemterminals (10) in eine DECT- Telekommunikationsanlage (8), wobei die DECT- Telekommunikationsanlage (8) eine Anlagenkommunikationsdatei für alle an dieser DECT- Telekommunikationsanlage (8) betriebenen Handsets (5) aufweist, wobei die Anlagenkommunikationsdatei für jedes Handset (5) wenigstens einen Datensatz wie eine Anlagenkennung, einen Gerätecode für ein eingebuchtes Handset (5) und/oder einen temporären Zugangscode enthält und wobei die Anlagenkommunikationsdatei mit einem Systemterminal (10) auslesbar und auf einem Datenträger (3) speicherbar ist,
**dadurch gekennzeichnet,**
**dass** die Anlagenkommunikationsdatei unabhängig vom Betrieb der DECT- Telekommunikationsanlage (8) auf einer externen Vorrichtung mit einem Referenzsystem (1) zum Ein- oder Ausbuchen eines zusätzlichen Handsets (5) manuell änderbar ist.

2. Verfahren nach Anspruch 1, **dadurch gekennzeichnet, dass** das Referenzsystem (1) einen Rechner (4) mit einem Speicher aufweist, in dem die Anlagenkommunikationsdatei speicherbar ist.

3. Verfahren nach Anspruch 1 oder 2, **dadurch gekennzeichnet, dass** der Rechner (4) ein Laufwerk (4a) für den Datenträger (3) aufweist.

4. Verfahren nach einem der vorhergehenden Ansprüche, **dadurch gekennzeichnet, dass** der Rechner (4) über ein öffentlichen Telefonnetz (7) mit der DECT- Telekommunikationsanlage (8) verbunden ist.

5. Verfahren nach einem der vorhergehenden Ansprüche, **dadurch gekennzeichnet, dass** der Rechner (4) ein Programm zum Ein- oder Auslesen der Anlagenkommunikationsdatei enthält.

6. Verfahren nach einem der vorhergehenden Ansprüche, **dadurch gekennzeichnet, dass** der Rechner (4) ein Programm zum Ein- oder Ausbuchen eines Handsets (5) in die Anlagenkommunikationsdatei enthält.

7. Verfahren nach einem der vorhergehenden Ansprüche, **dadurch gekennzeichnet, dass** der Rechner (4) die geänderte Anlagenkommunikationsdatei über das öffentliche Telefonnetz (7) an die DECT- Telekommunikationsanlage (8) sendet.

8. Vorrichtung zur Durchführung des Verfahrens nach einem der vorhergehenden Ansprüche,
**dadurch gekennzeichnet,**
**dass** die Vorrichtung ein Referenzsystem (1) mit einer Basisstation (2) zur Kommunikation mit einem Handset (5), ein Laufwerk (4a) für einen Datenträger (3) und/oder einen Rechner (4) aufweist.

9. Vorrichtung nach Anspruch 8, **dadurch gekennzeichnet, dass** das Referenzsystem (1) ein Interface (2a) zum öffentlichen Telefonnetz aufweist, über das die Anlagenkommunikationsdatei aus der DECT- Telekommunikationsanlage (8) auslesbar ist.

10. Vorrichtung nach Anspruch 8 oder 9, **dadurch gekennzeichnet, dass** das Referenzsystem (1) ein Interface (2a) aufweist, über das die Anlagenkommunikationsdatei an die DECT- Telekommunikationsanlage (8) übertragbar ist.
